# EUROPEAN PATENT APPLICATION

(11) **EP 4 712 564 A1**
(43) Date of publication of application: **18.03.2026**
(21) Application number: 23936893.9
(22) Date of filing: 12.05.2023
(51) Int. Cl.: H04W 36/08, H04W 72/0453

(54) **BEAM INFORMATION SENDING METHOD, BEAM INFORMATION RECEIVING METHOD, COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN); LUO, Xingyi, Beijing 100085 (CN)
(74) Representative: Gunzelmann, Rainer
(86) International application number: PCT/CN2023/094081
(87) International publication number: WO 2024/234203

(57) **Abstract**

The present disclosure relates to the technical field of communications, and particularly relates to a beam information sending method, a beam information receiving method, a communication device and a storage medium, The beam information sending method comprises: sending first information to a first cell, wherein the first information is information of at least one transmission beam of the first cell, which transmission beam is determined by a terminal, and the first cell is a cell to which the terminal is handed over on the basis of non-random access handover. According to the present disclosure, when a terminal is handed over to a first cell on the basis of non-random access handover, the terminal may send first information to the first cell, wherein the first information is information of at least one transmission beam of the first cell, which transmission beam is determined by the terminal. Accordingly, it is conducive to ensuring the communication quality of the terminal in the first cell.

## Description

### TECHNICAL FIELD

The disclosure relates to the field of wireless communication technologies, and in particular to a method and an apparatus for transmitting beam information, a method and an apparatus for receiving beam information, a communication system, a communication device, and a storage medium.

### BACKGROUND

A terminal in a wireless communication network may perform a handover operation to switch from one cell to another cell, thus communicating through the cell to which the terminal switches. However, the handover process may have technical problems in certain cases.

### SUMMARY

Embodiments of the disclosure provide a method and an apparatus for transmitting beam information, a method and an apparatus for receiving beam information, a communication system, a communication device, and a storage medium, to solve the technical problems in the related art.

According to a first aspect of embodiments of the disclosure, a method for transmitting beam information is provided. The method is performed by a terminal, including: transmitting first information to a first cell, in which the first information is information of at least one transmission beam of the first cell determined by the terminal; and the first cell is a cell to which the terminal performs a handover based on random access channel-less (RACH-less) handover.

According to a second aspect of embodiments of the disclosure, a method for receiving beam information is provided. The method is performed by a network device, including: receiving first information transmitted by a terminal, in which the first information is information of at least one transmission beam of a first cell determined by the terminal; the first cell is a cell to which the terminal performs a handover based on RACH-less handover; and the network device is a network device of the first cell.

According to a third aspect of embodiments of the disclosure, an apparatus for transmitting beam information is provided. The apparatus includes: a transmitting module, configured to transmit first information to a first cell, in which the first information is information of at least one transmission beam of the first cell determined by the terminal; and the first cell is a cell to which the terminal performs a handover based on RACH-less handover.

According to a fourth aspect of embodiments of the disclosure, an apparatus for receiving beam information is provided. The apparatus includes: a receiving module, configured to receive first information transmitted by a terminal, in which the first information is information of at least one transmission beam of the first cell determined by the terminal; the first cell is a cell to which the terminal performs a handover based on RACH-less handover; and the network device is a network device of the first cell.

According to a fifth aspect of embodiments of the disclosure, a communication device is provided. The communication device includes: one or more processors, configured to invoke instructions and cause the communication device to implement the above methods.

According to a sixth aspect of embodiments of the disclosure, a communication system is provided. The communication system includes: a terminal configured to perform the method for transmitting beam information, and a network device configured to perform the method for receiving beam information.

According to a seventh aspect of embodiments of the disclosure, a storage medium is provided. The storage medium stores instructions that, when executed on a communication device, cause the communication device to implement the above methods.

According to embodiments of the disclosure, when the terminal hands over to the first cell based on the RACH-less handover, the terminal may transmit the first information to the first cell, in which the first information is information of the at least one transmission beam of the first cell determined by the terminal. Thus, communication quality of the terminal in the first cell may be ensured.

### BRIEF DESCRIPTION OF THE DRAWINGS

In order to more clearly illustrate embodiments of the disclosure or technical solutions in the related art, accompanying drawings needed to use in the embodiment description will be introduced clearly below. Apparently, the accompanying drawings described below are only a part of embodiments of the disclosure. For the ordinary skilled in the art, other accompanying drawings may further be obtained based on these accompanying drawings without creative work.
FIG. 1A is a schematic architectural diagram illustrating a communication system according to an embodiment of the disclosure.
FIG. 1B is a schematic interaction diagram illustrating a method for transmitting beam information according to an embodiment of the disclosure.
FIG. 2 is a schematic flow chart illustrating a method for transmitting beam information according to an embodiment of the disclosure.
FIG. 3 is a schematic flow chart illustrating another method for transmitting beam information according to an embodiment of the disclosure.
FIG. 4 is a schematic flow chart illustrating yet another method for transmitting beam information according to an embodiment of the disclosure.
FIG. 5 is a schematic flow chart illustrating yet another method for transmitting beam information according to an embodiment of the disclosure.
FIG. 6 is a schematic flow chart illustrating a method for receiving beam information according to an embodiment of the disclosure.
FIG. 7 is a schematic flow chart illustrating another method for receiving beam information according to an embodiment of the disclosure.
FIG. 8 is a schematic block diagram illustrating an apparatus for transmitting beam information according to an embodiment of the disclosure.
FIG. 9 is a schematic block diagram illustrating an apparatus for receiving beam information according to an embodiment of the disclosure.
FIG. 10 is a schematic block diagram illustrating a communication device according to an embodiment of the disclosure.
FIG. 11 is a schematic block diagram illustrating a chip according to an embodiment of the disclosure.

### DETAILED DESCRIPTION

Embodiments of the disclosure provide a method and an apparatus for transmitting beam information, a method and an apparatus for receiving beam information, a communication system, a communication device, and a storage medium.

In a first aspect, embodiments of the disclosure provide a method for transmitting beam information. The method is performed by a terminal, including: transmitting first information to a first cell, in which the first information is information of at least one transmission beam of the first cell determined by the terminal; and the first cell is a cell to which the terminal performs a handover based on random access channel-less (RACH-less) handover.

In the above embodiments, when the terminal hands over to the first cell based on the RACH-less handover, the terminal may transmit the first information to the first cell, in which the first information is information of the at least one transmission beam of the first cell determined by the terminal. Thus, a network device of the first cell may learn the information of the transmission beam of the first cell which the terminal considers suitable, so that the network device may use the transmission beam as the transmission beam to communicate with the terminal in the first cell, thus ensuring communication quality of the terminal in the first cell.

In combination with some embodiments of the first aspect, in some embodiments, the transmission beam of the first cell determined by the terminal includes: a transmission beam of the first cell requested by the terminal.

In combination with some embodiments of the first aspect, in some embodiments, the transmission beam of the first cell determined by the terminal includes: a transmission beam of the first cell recommended by the terminal.

In combination with some embodiments of the first aspect, in some embodiments, the transmission beam of the first cell determined by the terminal includes: a transmission beam of the first cell selected by the terminal.

In combination with some embodiments of the first aspect, in some embodiments, the information of the at least one transmission beam of the first cell includes second information, in which the second information is associated with a synchronization signal reference signal received power (SS-RSRP), and the SS-RSRP is greater than or equal to a first threshold.

In combination with some embodiments of the first aspect, in some embodiments, the information of the at least one transmission beam of the first cell includes third information, in which the third information is associated with a channel-state-information reference signal (CSI RS)-RSRP, and the CSI RS-RSRP is greater than or equal to a second threshold.

In combination with some embodiments of the first aspect, in some embodiments, the second information includes: a synchronization signal and physical broadcast channel (PBCH) block (SSB) index.

In combination with some embodiments of the first aspect, in some embodiments, the second information includes: an SS-RSRP corresponding to an SSB.

In combination with some embodiments of the first aspect, in some embodiments, the third information includes a CSI RS index.

In combination with some embodiments of the first aspect, in some embodiments, the third information includes the CSI RS-RSRP.

In combination with some embodiments of the first aspect, in some embodiments, the third information includes an SSB index, in which the SSB index is associated with a CSI RS.

In combination with some embodiments of the first aspect, in some embodiments, the third information includes: an SS-RSRP of an SSB, in which the SSB is associated with the CSI RS.

In combination with some embodiments of the first aspect, in some embodiments, the method further includes: transmitting priority information of each transmission beam in the at least one transmission beam to the first cell, in which the at least one transmission beam includes a plurality of transmission beams.

In the above embodiments, by transmitting the priority information of each transmission beam to the first cell, the network device of the first cell may determine priorities of the plurality of transmission beams which the terminal considers suitable, in which suitability is sorted from high priority to low priority, and a transmission beam with a highest priority is a transmission beam which the terminal considers most suitable. Thus, the network device of the first cell may select a transmission beam with a relatively high priority as the transmission beam to communicate with the terminal in the first cell, thus ensuring good communication quality of the terminal.

In combination with some embodiments of the first aspect, in some embodiments, the first information is carried in a radio resource control (RRC) message.

In combination with some embodiments of the first aspect, in some embodiments, the RRC message includes an RRC reconfiguration complete message.

In combination with some embodiments of the first aspect, in some embodiments, the method further includes: receiving fourth information indicated by a source cell, in which the fourth information indicates information of a transmission beam of the first cell.

In combination with some embodiments of the first aspect, in some embodiments, the information of the transmission beam is carried in a conditional handover configuration.

In combination with some embodiments of the first aspect, in some embodiments, the information of the transmission beam is carried in a handover command.

In combination with some embodiments of the first aspect, in some embodiments, transmitting the first information to the first cell includes: in a case that the at least one transmission beam of the first cell determined by the terminal is different from the transmission beam of the first cell indicated by the source cell, transmitting the first information to the first cell.

In the above embodiments, when the at least one transmission beam of the first cell determined by the terminal is different from the transmission beam of the first cell indicated by the source cell, then the transmission beam used by the first cell is not a transmission beam which the terminal considers suitable. Thus, the terminal may transmit the first information to the first cell, so that the network device may use the transmission beam which the terminal considers suitable as the transmission beam to communicate with the terminal in the first cell, thus ensuring communication quality of the terminal in the first cell.

In combination with some embodiments of the first aspect, in some embodiments, transmitting the first information to the first cell includes: in a case that the at least one transmission beam of the first cell determined by the terminal is same as the transmission beam of the first cell indicated by the source cell, not transmitting the first information to the first cell.

In the above embodiments, when the at least one transmission beam of the first cell determined by the terminal is the same as the transmission beam of the first cell indicated by the source cell, then the transmission beam used by the first cell is the transmission beam which the terminal considers suitable. Then, after the terminal is handed over to the first cell, the terminal may communicate in the first cell based on the transmission beam which the terminal considers suitable, thereby ensuring good communication quality. Thus, it is unnecessary to transmit the first information to the first cell, which helps save communication resources.

In combination with some embodiments of the first aspect, in some embodiments, the method further includes: determining a transmission beam of the first cell based on a downlink transmission of the first cell.

In combination with some embodiments of the first aspect, in some embodiments, transmitting the first information to the first cell includes: in a case that the at least one transmission beam of the first cell determined by the terminal is different from the transmission beam of the first cell determined based on the downlink transmission, transmitting the first information to the first cell.

In the above embodiments, when the at least one transmission beam of the first cell determined by the terminal is different from the transmission beam of the first cell determined based on the downlink transmission, then the transmission beam used by the first cell is not the transmission beam which the terminal considers suitable. Thus, the terminal may transmit the first information to the first cell, so that the network device may use the transmission beam which the terminal considers suitable as the transmission beam to communicate with the terminal in the first cell, thereby ensuring communication quality of the terminal in the first cell.

In combination with some embodiments of the first aspect, in some embodiments, transmitting the first information to the first cell includes: in a case that the at least one transmission beam of the first cell determined by the terminal is the same as the transmission beam of the first cell determined based on the downlink transmission, not transmitting the first information to the first cell.

In the above embodiments, when the at least one transmission beam of the first cell determined by the terminal is the same as the transmission beam of the first cell determined based on the downlink transmission, then the transmission beam used by the first cell is the transmission beam which the terminal considers suitable. Then, after the terminal is handed over to the first cell, the terminal may communicate in the first cell based on the transmission beam which the terminal considers suitable, thereby ensuring good communication quality. Thus, it is unnecessary to transmit the first information to the first cell, which helps save communication resources.

In a second aspect, embodiments of the disclosure provide a method for receiving beam information. The method is performed by a network device, including: receiving first information transmitted by a terminal, in which the first information is information of at least one transmission beam of the first cell determined by the terminal; the first cell is a cell to which the terminal performs a handover based on RACH-less handover; and the network device is a network device of the first cell.

In the above embodiments, when the terminal hands over to the first cell based on the RACH-less handover, the terminal may transmit the first information to the first cell, in which the first information is information of the at least one transmission beam of the first cell determined by the terminal. The network device of the first cell may receive the first information transmitted by the terminal, and thus determine the information of the at least one transmission beam of the first cell determined by the terminal, that is, information of the transmission beam of the first cell which the terminal considers suitable. Thus, the network device of the first cell may learn the information of the transmission beam of the first cell which the terminal considers suitable, so that the network device may use the transmission beam as the transmission beam to communicate with the terminal in the first cell, thus ensuring communication quality of the terminal in the first cell.

In combination with some embodiments of the second aspect, in some embodiments, the transmission beam of the first cell determined by the terminal includes: a transmission beam of the first cell requested by the terminal.

In combination with some embodiments of the second aspect, in some embodiments, the transmission beam of the first cell determined by the terminal includes: a transmission beam of the first cell recommended by the terminal.

In combination with some embodiments of the second aspect, in some embodiments, the transmission beam of the first cell determined by the terminal includes: a transmission beam of the first cell selected by the terminal.

In combination with some embodiments of the second aspect, in some embodiments, the information of the at least one transmission beam of the first cell includes second information, in which the second information is associated with an SS-RSRP, and the SS-RSRP is greater than or equal to a first threshold.

In combination with some embodiments of the second aspect, in some embodiments, the information of the at least one transmission beam of the first cell includes third information, in which the third information is associated with a CSI RS-RSRP, and the CSI RS-RSRP is greater than or equal to a second threshold.

In combination with some embodiments of the second aspect, in some embodiments, the second information includes an SSB index.

In combination with some embodiments of the second aspect, in some embodiments, the second information includes an SS-RSRP corresponding to an SSB.

In combination with some embodiments of the second aspect, in some embodiments, the third information includes a CSI RS index.

In combination with some embodiments of the second aspect, in some embodiments, the third information includes the CSI RS-RSRP.

In combination with some embodiments of the second aspect, in some embodiments, the third information includes an SSB index, in which the SSB index is associated with a CSI RS.

In combination with some embodiments of the second aspect, in some embodiments, the third information includes an SS-RSRP of an SSB, in which the SSB is associated with a CSI RS.

In combination with some embodiments of the second aspect, in some embodiments, the method further includes: receiving priority information of each transmission beam in the at least one transmission beam transmitted by the terminal, in which the at least one transmission beam includes a plurality of transmission beams.

In the above embodiment, the network device of the first cell may receive the priority information of each transmission beam in the at least one transmission beam transmitted by the terminal, and thus may determine priorities of the plurality of transmission beams which the terminal considers suitable, in which suitability is sorted from high priority to low priority, and a transmission beam with a highest priority is a transmission beam which the terminal considers most suitable. Thus, the network device of the first cell may select a transmission beam with a relatively high priority as the transmission beam to communicate with the terminal in the first cell, thereby ensuring good communication quality of the terminal.

In combination with some embodiments of the second aspect, in some embodiments, the first information is carried in an RRC message.

In combination with some embodiments of the second aspect, in some embodiments, the RRC message includes an RRC reconfiguration complete message.

In a third aspect, embodiments of the disclosure provide an apparatus for transmitting beam information. The apparatus includes: a transmitting module, configured to transmit first information to a first cell, in which the first information is information of at least one transmission beam of the first cell determined by the terminal; and the first cell is a cell to which the terminal performs a handover based on RACH-less handover.

In a fourth aspect, embodiments of the disclosure provide an apparatus for receiving beam information. The apparatus includes: a receiving module, configured to receive first information transmitted by a terminal, in which the first information is information of at least one transmission beam of a first cell determined by the terminal; the first cell is a cell to which the terminal performs a handover based on RACH-less handover; and a network device is a network device of the first cell.

In a fifth aspect, embodiments of the disclosure provide a communication device. The communication device includes: one or more processors, one or more memories configured to store instructions, in which the processor is configured to invoke the instructions and cause the communication device to implement the method in the first aspect, the method in the second aspect, and the methods in optional implementations of the first aspect and the second aspect.

In a sixth aspect, embodiments of the disclosure provide a communication system. The communication system includes: a terminal configured to perform the method in the first aspect, and the methods in optional implementations of the first aspect, and a network device configured to perform the method in the second aspect, and the methods in optional implementations of the second aspect.

In a seventh aspect, embodiments of the disclosure provide a storage medium. The storage medium stores instructions that, when executed on a communication device, cause the communication device to implement the method in the first aspect, the method in the second aspect, and the methods in optional implementations of the first aspect and the second aspect.

In an eighth aspect, the embodiments of the disclosure provide a program product. When the program product is executed by a communication device, the communication device is caused to implement the method in the first aspect, the method in the second aspect, and the methods in optional implementations of the first aspect and the second aspect.

In a ninth aspect, the embodiments of the disclosure provide a computer program. When the computer program is running on a computer, the computer is caused to implement the method in the first aspect, the method in the second aspect, and the methods in optional implementations of the first aspect and the second aspect.

It may be understood that the apparatus for transmitting beam information, the apparatus for receiving beam information, the communication device, the communication system, the storage medium, the program product, and the computer program are all used to implement the method in the embodiments of the disclosure. Therefore, regarding beneficial effects they may achieve, reference may be made to the beneficial effects in the corresponding methods, which will not be repeated here.

The embodiments of the disclosure provide a method and an apparatus for transmitting beam information, a method and an apparatus for receiving beam information, a communication system, a communication device, and a storage medium. In some embodiments, terms such as "method for transmitting beam information", "method for receiving beam information", "method for information processing" and "communication method" may be used interchangeably, terms such as "apparatus for transmitting beam information", "apparatus for receiving beam information", "apparatus for information processing", and "communication apparatus" may be used interchangeably, and terms such as "information processing system" and "communication system" may be used interchangeably.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, terms and/or descriptions between the embodiments are consistent and may be referred to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc.

For example, when using articles such as "a", "an", "the" in English translation, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

Prefixes such as "first" and "second" in the embodiments of the disclosure are only used to distinguish different descriptive objects, and do not constitute restrictions on the position, order, priority, quantity or content of the descriptive objects. For statement of the descriptive objects, reference may be made to the description in the context of the claims or embodiments, and it should not constitute redundant restrictions due to the use of prefixes. For example, if a descriptive object is a "field", ordinal numbers before "field" in "first field" and "second field" do not limit a position or an order between the "fields", and the terms "first" and "second" do not limit whether "fields" they modify are in a same message, nor do they limit an order of the "first field" and the "second field". For another example, if a descriptive object is a "level", ordinal numbers before "level" in "first level" and "second level" do not limit a priority relationship between "levels". For another example, a number of descriptive objects is not limited by the ordinal number, and may be one or more. Taking "first apparatus" as an example, a number of "apparatuses" may be one or more. In addition, objects modified by different prefixes may be the same or different. For example, if the descriptive object is an " apparatus", then "first apparatus" and "second apparatus" may be a same apparatus or different apparatuses, and their types may be the same or different. For another example, if the descriptive object is "information", then "first information" and "second information" may be same information or different information, and their contents may be same or different.

In some embodiments, "including A", "containing A", "used to indicate A", and "carrying A" may be interpreted as directly carrying A or indirectly indicating A.

In some embodiments, the terms such as "in response to...", "in response to determining...", "in a case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network (AN) device", "radio access network (RAN) device", "base station (BS)", "radio base station", "fixed station", "node", "access point (AP)", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which communication between the access network device, the core network device, or the network device and the terminal is replaced by communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, an uplink channel, a downlink channel, etc. may be replaced by a side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, acquisition of data, information, etc. may comply with laws and regulations of a country where the data is obtained.

In some embodiments, data, information, etc. may be obtained with consent from users.

In addition, each element, each row, or each column in the table of the embodiments of the disclosure may be implemented as an independent embodiment, and a combination of any elements, any rows, or any columns may also be implemented as an independent embodiment.

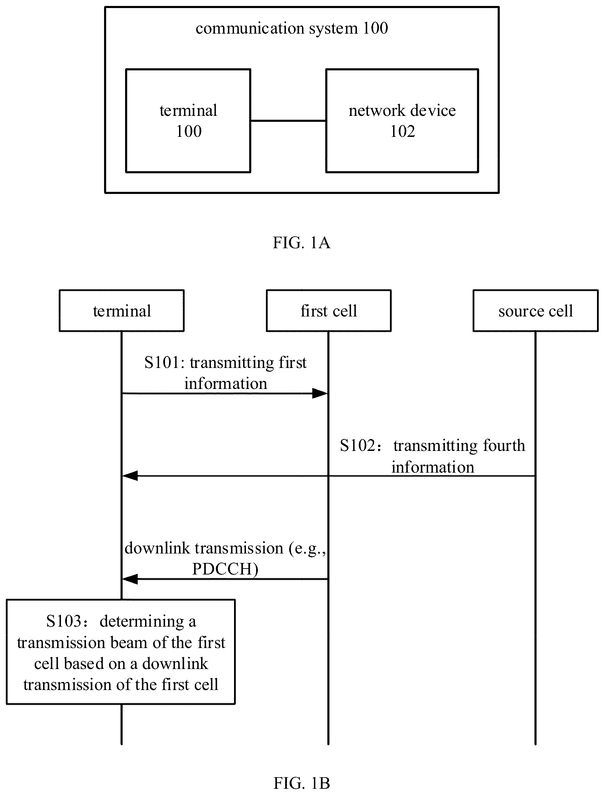

FIG. 1A is a schematic architectural diagram illustrating a communication system according to an embodiment of the disclosure.

As shown in FIG. 1A, the communication system 100 may include a terminal 101 and a network device 102.

In some embodiments, the network device includes at least one of: an access network device, or a core network device.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

In some embodiments, the terminal 101, for example, may include at least one of a mobile phone, a wearable device, an Internet of Things (IoT) device, a car with a communication function, a smart car, a Pad, a computer with a wireless receiving and transmitting function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, a base station in an open RAN, a base station in a cloud RAN, a base station in other communication systems, or an access node in a wireless networking (Wi-Fi^{™}) system, but is not limited herein.

In some embodiments, the technical solutions of the disclosure may be applicable to an Open RAN architecture. In this case, interfaces between or within access network devices involved in the embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting a CU-DU structure. Some functions of the protocol layer are centrally controlled by the CU, and some or all of remaining functions of the protocol layer are distributed in the DUs which are centrally controlled by the CU but are not limited herein.

It may be understood that the communication system described in the embodiments of the disclosure aims to more clearly illustrate the technical solutions of the embodiments of the disclosure, and does not constitute a limitation on the technical solutions proposed in the embodiments of the disclosure. Those skilled in the art may know that with the evolution of the system architecture and the emergence of new service scenarios, the technical solutions proposed in the embodiments of the disclosure are also applicable to similar technical problems.

The following embodiments of the disclosure may be applied to the communication system 100 or part of the subjects shown in FIG. 1A, but are not limited herein. Subjects shown in FIG. 1A are examples, and the communication system may include all or part of the subjects in FIG. 1A, or may include other subjects other than those shown in FIG. 1A. The numbers and forms of the subjects are arbitrary. The subjects may be physical or virtual. Connections between the subjects are examples. The subjects may be connected or disconnected, and each of the connections may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an IoT system, V2X, systems using other communication methods, and next-generation systems evolved based on them. In addition, a plurality of systems may also be combined (for example, a combination of LTE or LTE-A and 5G, etc.) for application.

In some embodiments, when the terminal performs a cell handover, after switching from a source cell (for example, a cell where the terminal is located before handover) to a first cell (for example, also referred to as a target cell), the terminal generally needs to initiate random access in the first cell. For example, the terminal may transmit a RACH preamble to the first cell to obtain uplink synchronization, and then transmit a physical uplink shared channel (PUSCH) to the first cell.

In some embodiments, the terminal may perform the cell handover based on RACH-less handover, that is, after switching from the source cell to the first cell, the terminal does not need to initiate a random access procedure in the first cell, i.e., the terminal does not transmit the RACH preamble in the first cell. Instead, the terminal may directly transmit the PUSCH, an RRC reconfiguration complete message, and other information based on an uplink (UL) grant transmitted by the first cell.

For example, when the terminal is in a non-terrestrial network (NTN), a satellite corresponding to the cell where the terminal is located moves rapidly in air. Since a signal coverage range of the satellite is large, a corresponding cell range is also large, and thus there are a plurality of terminals in the cell. When the satellite moves away from the terminals in the cell, all terminals in the cell need to perform the cell handover, causing a large number of terminals to hand over to the first cell almost simultaneously. If a large number of terminals initiate random access in the first cell, RACH resources are limited, and may lead to random access congestion, causing random access failure for many terminals, which may further lead to handover failure. Thus, for the terminals in the NTN, a handover from the source cell to the first cell may be performed based on RACH-less handover. Since random access does not need to be initiated, congestion caused by the large number of terminals initiating random access simultaneously is avoided, thus preventing random access failure and further avoiding handover failure.

However, performing the cell handover based on the RACH-less handover may have technical problems in certain scenarios. For example, when the terminal is in an NR network, such as an NR NTN or an NR terrestrial network (TN), and since the NR network is a multi-beam system, beam pairing is required between the terminal and the network device of the NR network.

In some embodiments, the network device of the first cell may transmit SSBs (synchronization signal and PBCH block, also referred to as a synchronization signal block) in a plurality of directions. For example, in one SS burst set, the network device transmits different SSBs in different directions. In this case, each SSB is associated with a transmission beam.

By receiving the SSBs, the terminal may determine SS-RSRPs. The terminal may determine a suitable SSB based on an SS-RSRP corresponding to each SSB, and thus determine a transmission beam associated with the SSB as a suitable transmission beam of the first cell.

Further, the terminal may initiate random access in the first cell. An SSB index is associated with random access related information. For example, the SSB index is associated with a RACH occasion, and the SSB index is associated with a preamble. Thus, the terminal may initiate random access based on the random access information associated with a determined SSB. For example, the terminal may transmit a preamble associated with the SSB index to the network device of the first cell in a RACH occasion associated with the SSB index.

The network device may determine the SSB which the terminal considers suitable based on the SSB associated with the random access information, and thus determine the transmission beam of the first cell which the terminal considers suitable, so that the first cell may use the transmission beam as a transmission beam to communicate with the terminal. Thus, beam pairing is achieved.

It may be seen that a beam pairing needs to be implemented based on random access. However, when the terminal hands over to the first cell based on the RACH-less handover, since random access does not need to be initiated in the first cell, the beam pairing process cannot be implemented, making it difficult to guarantee the communication quality of the terminal in the first cell.

FIG. 1B is a schematic interaction diagram illustrating a method for transmitting beam information according to an embodiment of the disclosure. The method for transmitting beam information may be applied to a communication system
As shown in FIG. 1B, the method for transmitting beam information may include the following steps S101 to S103.

At step S101, a terminal transmits first information to a network device of a first cell.

In an embodiment, the network device includes at least one of: an access network device, or a core network device.

In some embodiments, the first information is information of at least one transmission beam of the first cell requested by the terminal, and the first cell is a cell to which the terminal performs a handover based on RACH-less handover.

In some embodiments, the first information is information of the at least one transmission beam of the first cell recommended by the terminal, and the first cell is the cell to which the terminal performs the handover based on the RACH-less handover.

In some embodiments, the first information is information of the at least one transmission beam of the first cell recommended by the terminal, and the first cell is the cell to which the terminal performs a handover based on the RACH-less handover.

In some embodiments, the information of the at least one transmission beam of the first cell transmitted by the terminal to the network device may include second information, in which the second information is associated with an SS-RSRP, and the SS-RSRP is greater than or equal to a first threshold.

In some embodiments, the information of the at least one transmission beam of the first cell transmitted by the terminal to the network device of the first cell may include third information, in which the third information is associated with an SS-RSRP, and the SS-RSRP is greater than or equal to a first threshold.

In some embodiments, in a case where the at least one transmission beam includes a plurality of transmission beams, the terminal may also transmit priority information of each transmission beam to the network device of the first cell.

At step S102, a network device of a source cell may indicate fourth information to the terminal.

In some embodiments, the fourth information indicates information of a transmission beam of the first cell.

In some embodiments, in a case that the at least one transmission beam of the first cell determined by the terminal is different from the transmission beam of the first cell indicated by the source cell, the terminal transmits the first information to the first cell. In a case that the at least one transmission beam of the first cell determined by the terminal is same as the transmission beam of the first cell indicated by the source cell, the terminal does not need to transmit the first information to the first cell .

At step S103, the terminal may determine a transmission beam of the first cell.

In some embodiments, the terminal may determine the transmission beam of the first cell based on a downlink transmission of the first cell.

In some embodiments, in a case that the at least one transmission beam of the first cell determined by the terminal is different from the transmission beam of the first cell indicated by the source cell, the terminal transmits the first information to the first cell. In a case that the at least one transmission beam of the first cell determined by the terminal is same as the transmission beam of the first cell indicated by the source cell, the terminal does not need to transmit the first information to the first cell.

The communication method in the embodiments of the disclosure may include at least one of step S101 to step S103. For example, step S101 may be implemented as an independent embodiment, step S102 may be implemented as an independent embodiment, step S103 may be implemented as an independent embodiment, step S101 and step S102 and step S103 may be implemented as an independent embodiment, step S101 and step S102 may be implemented as an independent embodiment, step S101 and step S 103 may be implemented as an independent embodiment, step S102 and step S103 may be implemented as an independent embodiment, which is not limited herein.

In some embodiments, step S101 and step S102 may be performed in an exchange order or performed simultaneously, step S101 and step S103 may be performed in an exchange order or performed simultaneously, step S102 and step S103 may be performed in an exchange order or performed simultaneously, step S101 and step S102 and step S103 may be performed in an exchange order or performed simultaneously.

In some embodiments, step S101 is optional, and one or more of the steps may be omitted or substituted in different embodiments.

In some embodiments, step S102 is optional, and one or more of the steps may be omitted or substituted in different embodiments.

In some embodiments, step S103 is optional, and one or more of the steps may be omitted or substituted in different embodiments.

For specific embodiments related to the terminal and the network device in the embodiment shown in FIG. 1B, reference may be made to the following embodiments, which are not repeated in the disclosure.

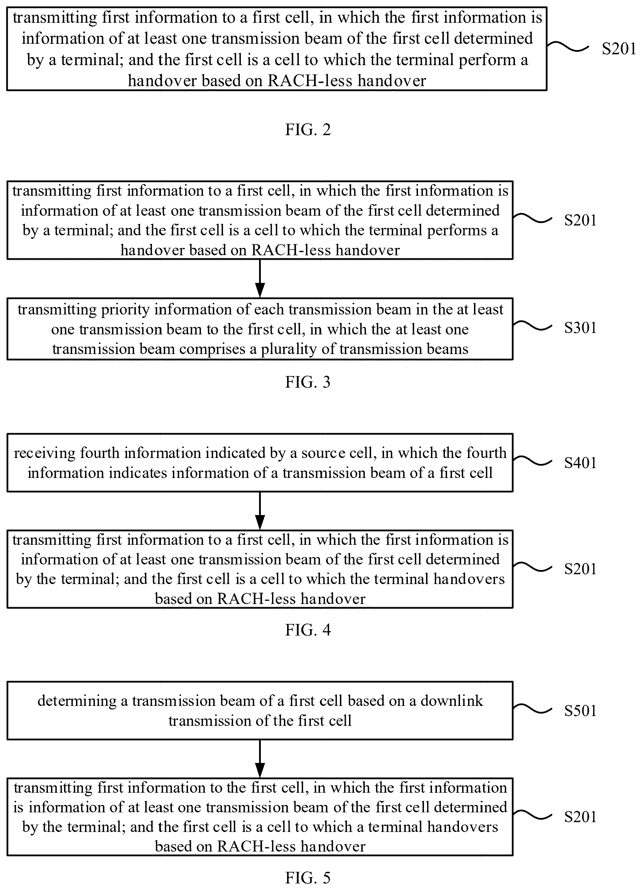

In a first aspect, embodiments of the disclosure provide a method for transmitting beam information. FIG. 2 is a schematic flow chart illustrating a method for transmitting beam information according to an embodiment of the disclosure. The method for transmitting beam information shown in the embodiment may be performed by a terminal. The terminal may communicate with a network device. For specific examples of the terminal and the network device, reference may be made to FIG. 1A, which will not be repeated here.

As shown in FIG. 2, the method for transmitting beam information may include the following step S201.

At step S201, first information is transmitted to a first cell, in which the first information is information of at least one transmission beam of the first cell determined by the terminal; and the first cell is a cell to which the terminal performs a handover based on RACH-less handover.

It should be noted that transmitting information to the first cell specifically refers to transmitting information to a network device of the first cell, which is generally referred to as transmitting information to the first cell in this field.

According to the embodiments of the disclosure, when the terminal hands over to the first cell based on the RACH-less handover, the terminal may transmit the first information to the first cell, in which the first information is information of the at least one transmission beam of the first cell determined by the terminal. Thus, the network device of the first cell may learn the information of a transmission beam of the first cell which the terminal considers suitable, so that the network device may use the transmission beam as a transmission beam to communicate with the terminal in the first cell, thus ensuring communication quality of the terminal in the first cell.

In some embodiments, the first cell may be an NR cell, or a cell of another RAT, for example, an LTE cell. For example, in a case where the first cell is an NR cell, the first cell may specifically be an NR NTN cell or an NR TN cell.

In some embodiments, the information of the at least one transmission beam of the first cell determined by the terminal may provide an auxiliary function for the network device. After learning the information of the transmission beam of the first cell which the terminal considers suitable, the network device may use the transmission beam as the transmission beam to communicate with the terminal in the first cell, or may select another beam as the transmission beam to communicate with the terminal in the first cell, which depends on the implementation of the network device.

In some embodiments, the first information is carried in an RRC message. For example, the terminal may transmit the first information to the network device of the first cell by carrying the first information in the RRC message, in which existing bits in the RRC message may be reused to carry the first information, or bits in the RRC message may be extended to carry the first information.

In some embodiments, the RRC message includes: an RRC reconfiguration complete message.

In some embodiments, the transmission beam of the first cell determined by the terminal includes at least one of:
a transmission beam of the first cell requested by the terminal;
a transmission beam of the first cell recommended by the terminal; or
a transmission beam of the first cell selected by the terminal.

In some embodiments, the information of the at least one transmission beam of the first cell includes at least one of:
second information, in which the second information is associated with an SS-RSRP, and the SS-RSRP is greater than or equal to a first threshold; or
third information, in which the third information is associated with a CSI RS-RSRP, and the CSI RS-RSRP is greater than or equal to a second threshold.

In some embodiments, after handing over to the first cell, the terminal may receive an SSB transmitted by the first cell on at least one transmission beam, determine a power of a received SSB as the SS-RSRP, then determine an SS-RSRP greater than or equal to the first threshold from the at least one SS-RSRP, and transmit the second information associated with the SSB corresponding to a determined SS-RSRP as the information of the transmission beam to the first cell. The network device of the first cell may determine the second information, and thus determine the transmission beam corresponding to the SSB as the transmission beam of the first cell which the terminal considers suitable.

For example, the second information includes at least one of: an SSB index; or an SS-RSRP corresponding to an SSB.

In some embodiments, after handing over to the first cell, the terminal may receive a CSI RS transmitted by the first cell on the at least one transmission beam, determine a power of a received CSI RS as the CSI RS-RSRP, then determine a CSI RS-RSRP greater than or equal to the first threshold from at least one CSI RS-RSRP, and transmit the third information associated with a CSI RS corresponding to a determined CSI RS-RSRP as the information of the transmission beam to the first cell. The network device of the first cell may determine the third information, and thus determine a transmission beam corresponding to the CSI RS as the transmission beam of the first cell which the terminal considers suitable.

For example, the third information includes at least one of: a CSI RS index; the CSI RS-RSRP; an SSB index, in which the SSB index is associated with the CSI RS; an SS-RSRP of an SSB, in which the SSB is associated with the CSI RS.

FIG. 3 is a schematic flow chart illustrating another method for transmitting beam information according to an embodiment of the disclosure. The method shown in the embodiment may be performed by a terminal. As shown in FIG. 3, the method for transmitting beam information may include the following step S301.

At step S301, priority information of each transmission beam in the at least one transmission beam is transmitted to the first cell, in which the at least one transmission beam includes a plurality of transmission beams.

It should be noted that embodiments shown in FIG. 3 may be implemented independently, or may be implemented in combination with at least one other embodiment in the disclosure. The specific implementation manner is not limited by the disclosure.

In some embodiments, the first information transmitted by the terminal to the first cell may include information of the plurality of transmission beams of the first cell, that is, the at least one transmission beam includes a plurality of transmission beams. In this case, the terminal may transmit the priority information of each transmission beam in the plurality of transmission beams to the first cell. The priority information may be transmitted to the first cell together with the first information, or may not be transmitted together with the first information. For example, the priority information may be transmitted to the first cell before transmitting the first information, or may be transmitted to the first cell after transmitting the first information.

By transmitting the priority information of each transmission beam to the first cell, the network device of the first cell may determine the priority of the plurality of transmission beams which the terminal considers suitable, where suitability is sorted from high priority to low priority, and a transmission beam with a highest priority is a transmission beam which the terminal considers most suitable. Thus, the network device of the first cell may select a transmission beam with a relatively high priority as a transmission beam to communicate with the terminal in the first cell, thus ensuring good communication quality of the terminal.

For example, the network device of the first cell may first determine whether the transmission beam with the highest priority may be used to communicate with the terminal. In case of determining that the transmission beam with the highest priority may be used to communicate with the terminal, the network device may use the transmission beam with the highest priority as the transmission beam to communicate with the terminal in the first cell. In case of determining that the transmission beam with the highest priority is not capable to be used to communicate with the terminal, the network device may further determine whether a transmission beam with a second highest priority may be used to communicate with the terminal. In case of determining that the transmission beam with the second highest priority may be used to communicate with the terminal, the network device may use the transmission beam with the second highest priority as the transmission beam to communicate with the terminal in the first cell. In case of determining that the transmission beam with the second highest priority is not capable of being used to communicate with the terminal, the network device may further determine whether the transmission beam with a third highest priority may be used to communicate with the terminal. This process continues iteratively, the network device preferentially selects a transmission beam with a relatively high priority that may be used to communicate with the terminal as the transmission beam of the first cell to communicate with the terminal.

FIG. 4 is a schematic flow chart illustrating another method for transmitting beam information according to an embodiment of the disclosure. The method shown in the embodiment may be performed by a terminal. As shown in FIG. 4, the method for transmitting beam information may further include the following step S401.

At step S401, fourth information indicated by a source cell is received, in which the fourth information indicates information of a transmission beam of the first cell.

It should be noted that embodiments shown in FIG. 4 may be implemented independently, or may be implemented in combination with at least one other embodiment in the disclosure. The specific implementation manner is not limited by the disclosure.

In some embodiments, the source cell may indicate the fourth information to the terminal, and the fourth information may indicate the information of the transmission beam of the first cell. Based on the fourth information, the terminal may determine the information of the transmission beam of the first cell, and thus determine a transmission beam used by the first cell.

In some embodiments, the information of the transmission beam is carried in at least one of: a conditional handover (CHO) configuration; or a handover command.

For example, in a case that a cell handover of the terminal is a conditional handover, a network device (for example, in the source cell) may transmit the CHO configuration to the terminal, and the information of the transmission beam of the first cell may be carried in the CHO configuration. The terminal may determine the information of the transmission beam of the first cell in the CHO configuration.

For example, in a case that the cell handover of the terminal is not a CHO, the network device (for example, in the source cell) may transmit the handover command to the terminal, and the information of the transmission beam of the first cell may be carried in the handover command. The terminal may determine the information of the transmission beam of the first cell in the handover command.

In some embodiments, the CHO configuration may be carried in an RRC reconfiguration message. In some embodiments, the handover command may be carried in an RRC reconfiguration message.

In some embodiments, transmitting the first information to the first cell includes at least one of:
in a case that the at least one transmission beam of the first cell determined by the terminal is different from the transmission beam of the first cell indicated by the source cell, transmitting the first information to the first cell; or
in a case that the at least one transmission beam of the first cell determined by the terminal is same as the transmission beam of the first cell indicated by the source cell, not transmitting the first information to the first cell.

In some embodiments, the terminal may determine the at least one transmission beam of the first cell on one hand, and may determine, based on the fourth information indicated by the source cell, the transmission beam used by the first cell as indicated by the source cell on the other hand. The terminal may then determine whether the at least one transmission beam of the first cell determined by the terminal is the same as the transmission beam of the first cell indicated by the source cell.

When the at least one transmission beam of the first cell determined by the terminal is different from the transmission beam of the first cell indicated by the source cell, then the transmission beam used by the first cell is not a transmission beam which the terminal considers suitable. Thus, the terminal may transmit the first information to the first cell, so that the network device may use the transmission beam which the terminal considers suitable as the transmission beam to communicate with the terminal in the first cell, thus ensuring communication quality of the terminal in the first cell.

When the at least one transmission beam of the first cell determined by the terminal is same as the transmission beam of the first cell indicated by the source cell, then the transmission beam used by the first cell is the transmission beam which the terminal considers suitable. Then, after the terminal hands over to the first cell, the terminal may communicate in the first cell based on the transmission beam which the terminal considers suitable, thus ensuring good communication quality. Thus, it is unnecessary to transmit the first information to the first cell, which helps save communication resources.

FIG. 5 is a schematic flow chart illustrating another method for transmitting beam information according to an embodiment of the disclosure. The method shown in the embodiment may be performed by a terminal. As shown in FIG. 4, the method for transmitting beam information may further include the following step S501.

At step S501, a transmission beam of a first cell is determined based on a downlink transmission of the first cell.

In some embodiments, the terminal may receive the downlink transmission of the first cell and determine the transmission beam of the first cell based on the downlink transmission of the first cell. For example, the terminal may receive a downlink transmission transmitted on each transmission beam in the first cell, and parse the downlink transmission. When a certain downlink transmission is successfully parsed, a transmission beam corresponding to the certain downlink transmission may be determined as the transmission beam of the first cell.

It should be noted that embodiments shown in FIG. 5 may be implemented independently, or may be implemented in combination with at least one other embodiment in the disclosure. The specific implementation manner is not limited by the disclosure.

The downlink transmission includes at least one of: physical layer information, a radio access control layer message, or a medium access control layer message. The following embodiments are exemplarily described mainly in a case where the downlink transmission includes the physical layer information. For example, the physical layer information includes a physical downlink control channel (PDCCH).

For example, the terminal is pre-configured with a cell-radio network temporary identifier (C-RNTI) for parsing a PDCCH transmitted by the first cell. Then, after the terminal hands over to the first cell, the terminal may receive a PDCCH transmitted on each transmission beam by the first cell and attempt to parse these PDCCHs using the C-RNTI. When a certain PDCCH is successfully parsed, the terminal may communicate with the first cell on a transmission beam corresponding to the certain PDCCH, and thus may determine the transmission beam corresponding to the certain PDCCH as the transmission beam of the first cell.

In a case that the downlink transmission carries a UL grant, the terminal may transmit a PUSCH, an RRC reconfiguration complete message, etc., based on the UL grant.

In the embodiment, before receiving the downlink transmission of the first cell, the terminal may determine resources and/or a transmission pattern of the downlink transmission of the first cell, so that after the terminal hands over to the first cell, the terminal may successfully receive the downlink transmission of the first cell based on the resources and/or the transmission pattern of the downlink transmission.

In some embodiments, when determining the transmission beam of the first cell based on the downlink transmission of the first cell, the terminal may also consider a signal quality of a transmission beam. For example, when a downlink transmission is received on a certain beam, whether a signal quality of the downlink transmission meets a requirement is determined. The signal quality meeting the requirement includes at least one of: an SS-RSRP of an SSB corresponding to the certain beam corresponding to the downlink transmission being greater than or equal to a first threshold, or a CSI RS-RSRP of a CSI RS corresponding to the certain beam corresponding to the downlink transmission being greater than or equal to a second threshold.

When the signal quality of the downlink transmission meets the requirement, further attempts are made to parse the downlink transmission. Thus, it is ensured that the transmission beam of the first cell determined by the terminal based on the downlink transmission of the first cell is not only a transmission beam used for the terminal to communicate with the first cell, but also a transmission beam whose communication quality meets the requirement.

In some embodiments, transmitting the first information to the first cell includes at least one of:
in a case that the at least one transmission beam of the first cell determined by the terminal is different from the transmission beam of the first cell determined based on the downlink transmission, transmitting the first information to the first cell; or
in a case that the at least one transmission beam of the first cell determined by the terminal is same as the transmission beam of the first cell determined based on the downlink transmission, not transmitting the first information to the first cell.

In some embodiments, the terminal may determine the at least one transmission beam of the first cell on one hand, and may determine the transmission beam of the first cell based on the downlink transmission of the first cell on the other hand. The terminal may then determine whether the at least one transmission beam of the first cell determined by the terminal is the same as the transmission beam of the first cell determined based on the downlink transmission of the first cell.

When the at least one transmission beam of the first cell determined by the terminal is different from the transmission beam of the first cell determined based on the downlink transmission, then a transmission beam used by the first cell is not a transmission beam which the terminal considers suitable. Thus, the terminal may transmit the first information to the first cell, so that the network device may use the transmission beam which the terminal considers suitable as the transmission beam to communicate with the terminal in the first cell, thus ensuring communication quality of the terminal in the first cell.

When the at least one transmission beam of the first cell determined by the terminal is the same as the transmission beam of the first cell determined based on the downlink transmission, then the transmission beam used by the first cell is the transmission beam which the terminal considers suitable. Then, after the terminal hands over to the first cell, the terminal may communicate in the first cell based on the transmission beam which the terminal considers suitable, thus ensuring good communication quality. Therefore, it is unnecessary to transmit the first information to the first cell, which helps save communication resources.

In some embodiments, names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, the terms "downlink control information (DCI)", "downlink (DL) assignment", "DL DCI", "UL grant", "UL DCI" and the like may be used interchangeably.

In some embodiments, the terms "radio", "wireless", "radio access network (RAN)", "access network (AN)", "RAN-based" and the like may be used interchangeably.

In some embodiments, terms such as "synchronization signal (SS)", "synchronization signal block (SSB)", "reference signal (RS)", "pilot", "pilot signal" and the like may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" and the like may be used interchangeably.

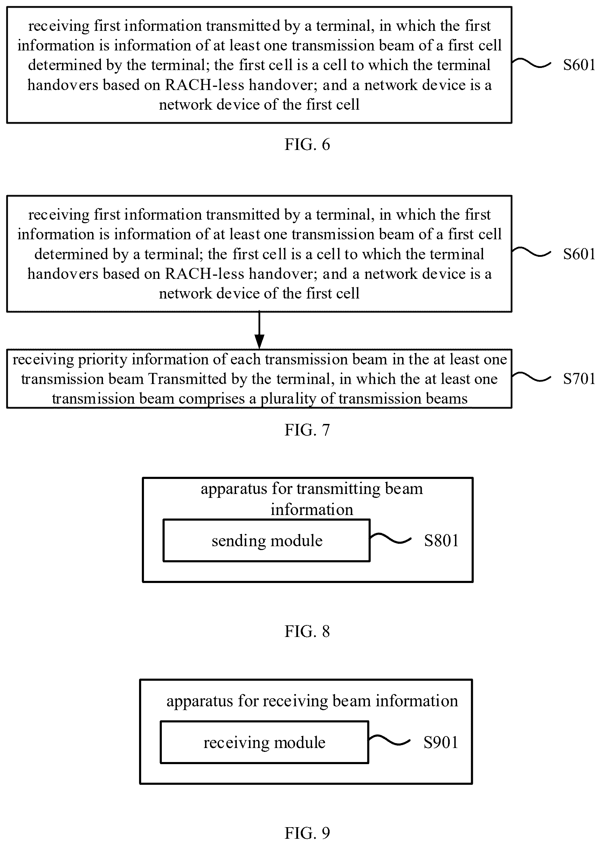

In a second aspect, embodiments of the disclosure provide a method for receiving beam information. FIG. 6 is a schematic flow chart illustrating a method for receiving beam information according to an embodiment of the disclosure. The method for receiving beam information shown in the embodiments may be performed by a network device. The network device may communicate with a terminal. For specific examples of the terminal and the network device, reference may be made to FIG. 1A, which will not be repeated here.

As shown in FIG. 6, the method for receiving beam information may include the following step S601.

At step S601, first information transmitted by the terminal is received, in which the first information is information of at least one transmission beam of the first cell determined by the terminal; the first cell is a cell to which the terminal performs a handover based on RACH-less handover; and the network device is a network device of the first cell.

According to the embodiments of the disclosure, when the terminal hands over to the first cell based on the RACH-less handover, the terminal may send the first information to the first cell, in which the first information is the information of the at least one transmission beam of the first cell determined by the terminal. The network device of the first cell may receive the first information transmitted by the terminal, and thus determine the information of the at least one transmission beam of the first cell determined by the terminal, that is, information of a transmission beam of the first cell which the terminal considers suitable. Thus, the network device of the first cell may learn the information of the transmission beam of the first cell which the terminal considers suitable, so that the network device may use the transmission beam as the transmission beam to communicate with the terminal in the first cell, thus ensuring communication quality of the terminal in the first cell.

In some embodiments, the first cell may be an NR cell, or a cell of another RAT, for example, an LTE cell. For example, in a case that the first cell is an NR cell, the first cell may specifically be an NR NTN cell or an NR TN cell.

In some embodiments, the information of the at least one transmission beam of the first cell determined by the terminal may provide an auxiliary function for the network device. After learning the information of the transmission beam of the first cell which the terminal considers suitable, the network device may use the transmission beam as a transmission beam to communicate with the terminal in the first cell, or may select another beam as the transmission beam to communicate with the terminal in the first cell, which depends on the implementation of the network device.

In some embodiments, the first information is carried in an RRC message. For example, the terminal may transmit the first information to the network device of the first cell by carrying the first information in the RRC message, in which existing bits in the RRC message may be reused to carry the first information, or bits in the RRC message may be extended to carry the first information.

In some embodiments, the RRC message includes: an RRC reconfiguration complete message.

In some embodiments, the transmission beam of the first cell determined by the terminal includes at least one of:
a transmission beam of the first cell requested by the terminal;
a transmission beam of the first cell recommended by the terminal; or
a transmission beam of the first cell selected by the terminal.

In some embodiments, the information of the at least one transmission beam of the first cell includes at least one of:
second information, in which the second information is associated with an SS-RSRP, and the SS-RSRP is greater than or equal to a first threshold; or
third information, in which the third information is associated with a CSI RS-RSRP, and the CSI RS-RSRP is greater than or equal to a second threshold.

For example, the second information includes at least one of: an SSB index; or an SS-RSRP corresponding to an SSB.

In some embodiments, after handing over to the first cell, the terminal may receive a CSI RS transmitted by the first cell on at least one transmission beam, determine a power of a received CSI RS as the CSI RS-RSRP, then determine a CSI RS-RSRP greater than or equal to the first threshold from at least one CSI RS-RSRP, and transmit the third information associated with a CSI RS corresponding to a determined CSI RS-RSRP as the information of the transmission beam to the first cell. The network device of the first cell may determine the CSI RS-RSRP associated with the third information, and the CSI RS corresponding to the CSI RS-RSRP, and thus determine a transmission beam corresponding to the CSI RS as the transmission beam of the first cell which the terminal considers suitable.

For example, the third information includes at least one of: a CSI RS index; the CSI RS-RSRP; an SSB index, in which the SSB index is associated with the CSI RS; an SS-RSRP of an SSB, in which the SSB is associated with the CSI RS.

FIG. 7 is a schematic flow chart illustrating another method for receiving beam information according to an embodiment of the disclosure. The method for receiving beam information shown in the embodiments may be performed by a network device. As shown in FIG. 7, the method for receiving beam information may include the following step S701.

At step S701, priority information of each transmission beam in at least one transmission beam transmitted by a terminal is received, in which the at least one transmission beam includes a plurality of transmission beams.

It should be noted that embodiments shown in FIG. 7 may be implemented independently, or may be implemented in combination with at least one other embodiment in the disclosure. The specific implementation manner is not limited by the disclosure.

In some embodiments, the first information transmitted by the terminal to the first cell may include information of the plurality of transmission beams, that is, the at least one transmission beam includes the plurality of transmission beams. In this case, the terminal may transmit the priority information of each transmission beam in the plurality of transmission beams to the first cell. The priority information may be transmitted to the first cell together with the first information, or may not be transmitted together with the first information. For example, the priority information may be transmitted to the first cell before transmitting the first information, or may be transmitted to the first cell after transmitting the first information.

The network device of the first cell may receive the priority information of each transmission beam in the at least one transmission beam transmitted by the terminal, and thus may determine priorities of the plurality of transmission beams which the terminal considers suitable, where suitability is sorted from high priority to low priority, and a transmission beam with a highest priority is a transmission beam which the terminal considers most suitable. Thus, the network device of the first cell may select a transmission beam with a relatively high priority as a transmission beam to communicate with the terminal in the first cell, thus ensuring good communication quality of the terminal.

For example, the network device of the first cell may first determine whether the transmission beam with the highest priority may be used to communicate with the terminal. In case of determining that the transmission beam with the highest priority may be used to communicate with the terminal, the network device may use the transmission beam with the highest priority as the transmission beam to communicate with the terminal in the first cell. In case of determining that the transmission beam with the highest priority is not capable to be used to communicate with the terminal, the network device may further determine whether a transmission beam with a second highest priority may be used to communicate with the terminal. In case of determining that the transmission beam with the second highest priority may be used to communicate with the terminal, the network device may use the transmission beam with the second highest priority as the transmission beam to communicate with the terminal in the first cell. In case of determining that the transmission beam with the second highest priority is not capable to be used to communicate with the terminal, the network device may further determine whether a transmission beam with a third highest priority may be used to communicate with the terminal. This process continues iteratively, the network device preferentially selects a transmission beam with a relatively high priority that may be used to communicate with the terminal as the transmission beam of the first cell to communicate with the terminal.

Embodiments of the disclosure also provide a communication method, applied in a communication system. The communication system includes a terminal and a network device.

The terminal is configured to implement the method for transmitting beam information according to any of the above embodiments. For specific implementation details, reference may be made to the above embodiments, which are not repeated here.

The network device is configured to implement the method for receiving beam information according to any of the above embodiments. For specific implementation details, reference may be made to the above embodiments, which are not repeated here.

Corresponding to the embodiments of the method for transmitting beam information and the method for receiving beam information described above, the disclosure also provides embodiments of an apparatus for transmitting beam information and an apparatus for receiving beam information.

FIG. 8 is a schematic block diagram illustrating an apparatus for transmitting beam information according to an embodiment of the disclosure. As shown in FIG. 8, the apparatus for transmitting beam information includes a transmitting module 801.

The transmitting module 801 is configured to transmit first information to a first cell, in which the first information is information of at least one transmission beam of the first cell determined by a terminal; and the first cell is a cell to which the terminal performs a handover based on RACH-less handover.

In some embodiments, the transmission beam of the first cell determined by the terminal includes at least one of: a transmission beam of the first cell requested by the terminal; a transmission beam of the first cell recommended by the terminal; or a transmission beam of the first cell selected by the terminal.

In some embodiments, the information of the at least one transmission beam of the first cell includes at least one of:
second information, in which the second information is associated with an SS-RSRP, and the SS-RSRP is greater than or equal to a first threshold; or
third information, in which the third information is associated with a CSI RS-RSRP, and the CSI RS-RSRP is greater than or equal to a second threshold.

In some embodiments, the second information includes at least one of: an SSB index; or an SS-RSRP corresponding to an SSB.

In some embodiments, the third information includes at least one of: a CSI RS index; the CSI RS-RSRP; an SSB index, in which the SSB index is associated with a CSI RS; or an SS-RSRP of an SSB, in which the SSB is associated with the CSI RS.

In some embodiments, the transmitting module 801 is further configured to transmit priority information of each transmission beam in the at least one transmission beam to the first cell, in which the at least one transmission beam includes a plurality of transmission beams.

In some embodiments, the first information is carried in an RRC message.

In some embodiments, the RRC message includes: an RRC reconfiguration complete message.

In some embodiments, the apparatus further includes a receiving module, configured to receive fourth information indicated by a source cell, in which the fourth information indicates information of a transmission beam of the first cell.

In some embodiments, the information of the transmission beam is carried in at least one of: a CHO configuration; or a handover command.

In some embodiments, transmitting the first information to the first cell includes at least one of: in a case that the at least one transmission beam of the first cell determined by the terminal is different from the transmission beam of the first cell indicated by the source cell, transmitting the first information to the first cell; or in a case that the at least one transmission beam of the first cell determined by the terminal is same as the transmission beam of the first cell indicated by the source cell, not transmitting the first information to the first cell.

In some embodiments, the apparatus further includes a receiving module, configured to determine a transmission beam of the first cell based on a downlink transmission of the first cell.

In some embodiments, transmitting the first information to the first cell includes at least one of: in a case that the at least one transmission beam of the first cell determined by the terminal is different from the transmission beam of the first cell determined based on the downlink transmission, transmitting the first information to the first cell; or in a case that the at least one transmission beam of the first cell determined by the terminal is same as the transmission beam of the first cell determined based on the downlink transmission, not transmitting the first information to the first cell.

FIG. 9 is a schematic block diagram illustrating an apparatus for receiving beam information according to an embodiment of the disclosure. As shown in FIG. 9, the apparatus for receiving beam information includes a receiving module 901.

The receiving module 901 is configured to receive first information transmitted by a terminal, in which the first information is information of at least one transmission beam of the first cell determined by the terminal; the first cell is a cell to which the terminal performs a handover based on RACH-less handover; and a network device is a network device of the first cell.

In some embodiments, the transmission beam of the first cell determined by the terminal includes at least one of: a transmission beam of the first cell requested by the terminal; a transmission beam of the first cell recommended by the terminal; or a transmission beam of the first cell selected by the terminal.

In some embodiments, the information of the at least one transmission beam of the first cell includes at least one of:
second information, in which the second information is associated with an SS-RSRP, and the SS-RSRP is greater than or equal to a first threshold; or
third information, in which the third information is associated with a CSI RS-RSRP, and the CSI RS-RSRP is greater than or equal to a second threshold.

In some embodiments, the second information includes at least one of: an SSB index; or an SS-RSRP corresponding to an SSB.

In some embodiments, the third information includes at least one of: a CSI RS index; the CSI RS-RSRP; an SSB index, in which the SSB index is associated with a CSI RS; or an SS-RSRP of an SSB, in which the SSB is associated with a CSI RS.

In some embodiments, the receiving module 901 is further configured to receive priority information of each transmission beam in the at least one transmission beam transmitted by the terminal, in which the at least one transmission beam includes a plurality of transmission beams.

In some embodiments, the first information is carried in an RRC message.

In some embodiments, the RRC message includes: an RRC reconfiguration complete message.

For the apparatus embodiments, since the apparatus embodiments substantially correspond to the method embodiments, reference may be made to the descriptions of the corresponding parts in the method embodiments for relevant details. The apparatus embodiments described above are merely illustrative. The above modules described as separate parts may or may not be physically separated, parts shown as modules may or may not be physical modules. That is, the above modules may be located in one place, or may be distributed to a plurality of network modules. Some or all modules may be selected according to an actual requirement to achieve a purpose of the solutions in embodiments of the disclosure. Those ordinary skill in the art may understand and implement the technical solutions without creative efforts.

Embodiments of the disclosure also provide a communication device. The communication device includes: one or more processors, configured to call instructions and cause the communication device to implement the method for transmitting beam information and the method for receiving beam information according to any one of the above embodiments.

Embodiments of the disclosure also provide a communication system. The communication system includes: a terminal configured to perform the method for transmitting beam information according to any one of the above embodiments, and a network device configured to perform the method for receiving beam information according to any one of the above embodiments.

Embodiments of the disclosure also provide a storage medium. The storage medium stores instructions that, when executed on a communication device, cause the communication device to implement the method for transmitting beam information and the method for receiving beam information according to any one of the above embodiments.

The embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. Functions of some or all units or modules may be implemented by designing the hardware circuit. A hardware circuit may be understood as one or more processors. For example, in an implementation, the hardware circuit is an application specific integrated circuit (ASIC). The functions of some or all units or modules are implemented by designing logical relationships of components within the hardware circuit. In another implementation, the hardware circuit may be implemented by a programmable logic device (PLD). Taking a field-programmable gate array (FPGA) as an example, it may include a large number of logic gate circuits. Connection between the logic gate circuits are configured via a profile to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as the microprocessor), a digital signal processor (DSP), etc. In another implementation, the processor may implement functions via a logical relationship of hardware circuits. The logical relationship of the hardware circuits is fixed or reconstructed, for example, the processor may be implemented as a hardware circuit implemented by an ASIC or a PLD, such as a FPGA. In a reconstructed hardware circuit, a process that the processor loads the profile to implement a hardware circuit configuration may be understood as a process that the processor loads the instructions to implement the functions of some or all units. Furthermore, it may also be a hardware circuit designed for artificial intelligence, which may be understood as the ASIC, such as a neural network processing unit (NPU), a tensor processing unit (TPU), a deep learning processing unit (DPU), etc.

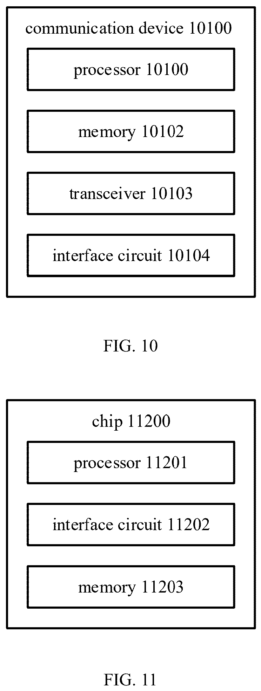

FIG. 10 is a schematic block diagram illustrating a communication device 10100 according to an embodiment of the disclosure. The communication device 10100 may be a network device (e.g., an access network device, a core network device, etc.), a terminal (e.g., a user equipment), a chip, a chip system or a processor that supports the network device to implement any one of the above methods, or a chip, a chip system or a processor that supports the terminal to implement any one of the above methods. The communication device 10100 may be configured to implement the methods described in the method embodiments, and reference may be made to descriptions in the method embodiments.

As shown in FIG. 10, the communication device 10100 may include one or more processors 10101. The processor 10101 may include a general-purpose processor or a dedicated processor. For example, the processor may be a baseband processor or a central processor. The baseband processor may be configured to process a communication protocol and communication data. The central processor may be configured to control a communication device (e.g., a base station, a baseband chip, a terminal, a terminal chip, a DU or CU, etc.), execute a computer program, and process data of the computer program. The processor 10101 is configured to call instructions so that the communication device 10100 may implement any one of the above methods.

In some embodiments, the communication device 10100 may also include one or more memories 10102 for storing instructions. Optionally, all or some of the memories 10102 may also be located outside the communication device 10100.

In some embodiments, the communication device 10100 further includes one or more transceivers 10103. When the communication device 10100 includes one or more transceivers 10103, communication steps such as transmitting and receiving in the above methods are performed by the transceiver 10103, and other steps are performed by the processor 10101.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 10100 further includes one or more interface circuits 10104. The interface circuit 10104 is connected to the memory 10102. The interface circuit 10104 may be configured to receive signals from the memory 10102 or other devices, and may be configured to transmit the signals to the memory 10102 or other devices. For example, the interface circuit 10104 may read instructions stored in the memory 10102 and transmit the instructions to the processor 10101.

The communication device 10100 described in the above embodiments may be a network device or a terminal, but the scope of the communication device 10100 described in the disclosure is not limited, and a structure of the communication device 10100 may not be limited by FIG. 10. The communication device may be an independent device or may be a part of a larger device. For example, the communication device may be the following: (1) an independent integrated circuit (IC), or a chip, or a chip system or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 11 is a schematic block diagram of a chip 11200 according to an embodiment of the disclosure. For a case where the communication device 10100 may be a chip or a chip system, reference may be made to the block diagram of the chip 11200 shown in FIG. 11, which is not limited herein.

The chip 11200 includes one or more processors 11201. The processor 11201 is configured to call the instructions to cause the chip 11200 to execute any one of the above methods.

In some embodiments, the chip 11200 further includes one or more interface circuits 11202. The interface circuit 11202 is connected to a memory 11203. The interface circuit 11202 may be configured to receive signals from the memory 11203 or other devices, and may be configured to transmit the signals to the memory 11203 or other devices. For example, the interface circuit 11202 may read the instructions stored in the memory 11203 and transmit the instructions to the processor 11201. Optionally, the terms such as interface circuit, interface, transceiver pin, transceiver, etc. may be used interchangeably.

In some embodiments, the chip 11200 further includes one or more memories 11203 for storing instructions. Optionally, all or some of the memories 11203 may be located outside the chip 11200.

The disclosure also provides a storage medium for storing instructions. When the instructions are running on the communication device 10100, the communication device 10100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The disclosure also provides a program product. When the program product is executed by the communication device 10100, the communication device 10100 is caused to implement any one of the above methods. Optionally, the above program product is a computer program product.

The disclosure also provides a computer program. When the computer program is running on a computer, the computer is caused to implement any one of the above methods.

## Claims

1. A method for transmitting beam information, performed by a terminal, comprising:
transmitting first information to a first cell, wherein the first information is information of at least one transmission beam of the first cell determined by the terminal; and the first cell is a cell to which the terminal performs a handover based on random access channel-less (RACH-less) handover.

2. The method according to claim 1, wherein the at least one transmission beam of the first cell determined by the terminal comprises at least one of:
a transmission beam of the first cell requested by the terminal;
a transmission beam of the first cell recommended by the terminal; or
a transmission beam of the first cell selected by the terminal.

3. The method according to claim 1, wherein the information of the at least one transmission beam of the first cell comprises at least one of:
second information, wherein the second information is associated with a synchronization signal reference signal received power (SS-RSRP), and the SS-RSRP is greater than or equal to a first threshold; or
third information, wherein the third information is associated with a channel-state-information reference signal-RSRP (CSI RS-RSRP), and the CSI RS-RSRP is greater than or equal to a second threshold.

4. The method according to claim 3, wherein the second information comprises at least one of:
a synchronization signal and physical broadcast channel (PBCH) block (SSB) index; or
an SS-RSRP corresponding to an SSB.

5. The method according to claim 3, wherein the third information comprises at least one of:
a CSI RS index;
the CSI RS-RSRP;
a synchronization signal and physical broadcast channel (PBCH) block (SSB) index, wherein the SSB index is associated with a CSI RS; or
an SS-RSRP of an SSB, wherein the SSB is associated with a CSI RS.

6. The method according to any one of claims 1 to 5, further comprising:
transmitting priority information of each transmission beam in the at least one transmission beam to the first cell, wherein the at least one transmission beam comprises a plurality of transmission beams.

7. The method according to any one of claims 1 to 6, wherein the first information is carried in a radio resource control (RRC) message.

8. The method according to claim 7, wherein the RRC message comprises:
an RRC reconfiguration complete message.

9. The method according to any one of claims 1 to 8, further comprising:
receiving fourth information indicated by a source cell, wherein the fourth information indicates information of a transmission beam of the first cell.

10. The method according to claim 9, wherein the information of the transmission beam is carried in at least one of:
a conditional handover configuration; or
a handover command.

11. The method according to claim 9, wherein transmitting the first information to the first cell comprises at least one of:
in a case that the at least one transmission beam of the first cell determined by the terminal is different from the transmission beam of the first cell indicated by the source cell, transmitting the first information to the first cell; or
in a case that the at least one transmission beam of the first cell determined by the terminal is same as the transmission beam of the first cell indicated by the source cell, not transmitting the first information to the first cell.

12. The method according to any one of claims 1 to 8, further comprising:
determining a transmission beam of the first cell based on a downlink transmission of the first cell.

13. The method according to claim 12, wherein transmitting the first information to the first cell comprises at least one of:
in a case that the at least one transmission beam of the first cell determined by the terminal is different from the transmission beam of the first cell determined based on the downlink transmission, transmitting the first information to the first cell; or
in a case that the at least one transmission beam of the first cell determined by the terminal is same as the transmission beam of the first cell determined based on the downlink transmission, not transmitting the first information to the first cell.

14. A method for receiving beam information, performed by a network device, comprising:
receiving first information transmitted by a terminal, wherein the first information is information of at least one transmission beam of the first cell determined by the terminal; the first cell is a cell to which the terminal performs a handover based on random access channel (RACH)-less handover; and the network device is a network device of the first cell.

15. The method according to claim 14, wherein the at least one transmission beam of the first cell determined by the terminal comprises at least one of:
a transmission beam of the first cell requested by the terminal;
a transmission beam of the first cell recommended by the terminal; or
a transmission beam of the first cell selected by the terminal.

16. The method according to claim 14, wherein the information of the at least one transmission beam of the first cell comprises at least one of:
second information, wherein the second information is associated with a synchronization signal reference signal received power (SS-RSRP), and the SS-RSRP is greater than or equal to a first threshold; or
third information, wherein the third information is associated with a channel-state-information reference signal (CSI RS)-RSRP, and the CSI RS-RSRP is greater than or equal to a second threshold.

17. The method according to claim 16, wherein the second information comprises at least one of:
a synchronization signal and physical broadcast channel (PBCH) block (SSB) index; or
an SS-RSRP corresponding to an SSB.

18. The method according to claim 17, wherein the third information comprises at least one of:
a CSI RS index;
the CSI RS-RSRP;
a synchronization signal and physical broadcast channel (PBCH) block (SSB) index, wherein the SSB index is associated with a CSI RS; or
an SS-RSRP of an SSB, wherein the SSB is associated with a CSI RS.

19. The method according to any one of claims 14 to 18, further comprising:
receiving priority information of each transmission beam in the at least one transmission beam transmitted by the terminal, wherein the at least one transmission beam comprises a plurality of transmission beams.

20. The method according to any one of claims 14 to 19, wherein the first information is carried in a radio resource control (RRC) message.

21. The method according to claim 20, wherein the RRC message comprises:
an RRC reconfiguration complete message.

22. An apparatus for transmitting beam information, comprising:
a transmitting module, configured to transmit first information to a first cell, wherein the first information is information of at least one transmission beam of the first cell determined by a terminal; and the first cell is a cell to which the terminal performs a handover based on random access channel-less (RACH-less) handover.

23. An apparatus for receiving beam information, comprising:
a receiving module, configured to receive first information transmitted by a terminal, wherein the first information is information of at least one transmission beam of the first cell determined by the terminal; the first cell is a cell to which the terminal performs a handover based on random access channel-less (RACH-less) handover.

24. A communication device, comprising:
one or more processors;
wherein the processors are configured to invoke instructions to cause the communication device to implement the method according to any one of claims 1 to 13, or to implement the method according to any one of claims 14 to 21.

25. A communication system, comprising a terminal and a network device, wherein the terminal is configured to implement the method according to any one of claims 1 to 13, and the network device is configured to implement the method according to any one of claims 14 to 21.

26. A storage medium, storing instructions,
when the instructions are executed on a communication device, cause the communication device to implement the method according to any one of claims 1 to 13, or to implement the method according to any one of claims 14 to 21.
